# EUROPEAN PATENT APPLICATION

(11) **EP 2 620 056 A1**
(43) Date of publication of application: **31.07.2013**
(21) Application number: 11826782.2
(22) Date of filing: 14.09.2011
(51) Int. Cl.: A23G 1/00, A23G 1/30

(54) **METHOD FOR PRODUCING CHOCOLATE WITH FILLING AND CHOCOLATE PRODUCED THEREBY**

(30) Priority: 24.09.2010 JP 2010214410
(71) Applicant: Lotte Co., Ltd., Tokyo 160-0023 (JP)
(72) Inventor: ASHITANI, Hiroaki, Saitama-shi Saitama 336-8601 (JP); AIHARA, Takeshi, Saitama-shi Saitama 336-8601 (JP); USAMI, Yoko, Saitama-shi Saitama 336-8601 (JP); TABATA, Michika, Saitama-shi Saitama 336-8601 (JP)
(74) Representative: Witte, Weller & Partner
(86) International application number: PCT/JP2011/071002
(87) International publication number: WO 2012/039336

(57) **Abstract**

To provide a center filled chocolate product which stably contains a greater amount of a center material and has a novel eating texture different from that of conventional shell chocolate, and a production method therefor. First chocolate (8) containing 10 to 50 wt% of sugar, 0 to 70 wt% of cocoa mass and 0 to 40 wt% of whole milk powder and/or skim milk powder and having a fat content of 30 to 60 wt% based on the overall weight thereof is poured in a concave mold (9), and a cooled convex mold (10) is engaged with the concave mold (9), whereby a shell chocolate portion (3) of a predetermined thickness is formed as having a hollow channel (4). After the hollow channel (4) is filled with a sauce (6), second chocolate (13) containing 10 to 50 wt% of sugar, 0 to 70 wt% of cocoa mass and 0 to 40 wt% of whole milk powder and/or skim milk powder and having a fat content of 30 to 60 wt% based on the overall weight thereof is fed into contact with an outer edge of the shell chocolate portion (3), whereby a bottom chocolate portion (5) is formed to close the hollow channel (4) of the shell chocolate portion (3).

## Description

### TECHNICAL FIELD

The present invention relates to a center-filled chocolate product, and to a production method therefor. More specifically, the invention relates to a stick-shaped center-filled chocolate product including a center material covered with a thin shell chocolate portion.

### BACKGROUND ART

A shell chocolate production method disclosed in PTL 1, for example, is prior art related to the present invention.
In the shell chocolate production method proposed in PTL1, shell chocolate can be produced with a center material kept in a liquid state (paragraph [0004] in PTL1).

### CITATION LIST

### PATENT LITERATURE

PTL1: JP-2003-310164A

### SUMMARY OF INVENTION

### TECHNICAL PROBLEM

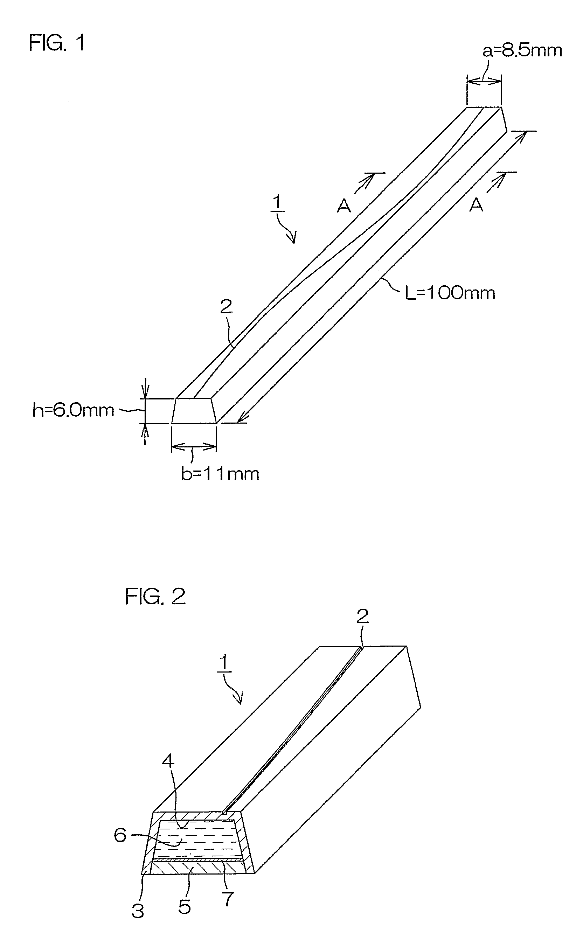

In the shell chocolate production method disclosed in PTL1, however, the shell chocolate is produced by inverting a concave mold for removal of excess chocolate (see FIG. 2 and the like in PTL1), so that the shell chocolate fails to have a uniform thickness. Further, PTL1 does not propose a chocolate formulation and a production method optimum for the shell chocolate.

In view of the foregoing, it is a principal object of the present invention to provide a center-filled chocolate production method which permits a center-filled chocolate product to stably contain a greater amount of a center material, and to provide a chocolate product produced by the method.
It is another object of the present invention to provide a center-filled chocolate product which has a novel eating texture different from those of conventional shell chocolate products, and to provide a production method therefor.

### SOLUTION TO PROBLEM

According to an inventive aspect of claim 1, there is provided a method of producing a center-filled chocolate product, the center-filled chocolate production method comprising the steps of: forming a shell chocolate portion including a constant thickness wall having a recessed cross sectional shape to define a hollow portion by providing first formulation chocolate which comprises 10 to 50 wt% of sugar, 0 to 70 wt% of cocoa mass and 0 to 40 wt% of whole milk powder and/or skim milk powder and has a fat content of 30 to 60 wt% based on the overall weight of the first formulation chocolate, melting the chocolate, pouring the melted chocolate in a concavity and engaging a cooled convexity with the concavity; filling the hollow portion of the shell chocolate portion with a center material; and forming a bottom chocolate portion to close an open face of the hollow portion of the shell chocolate portion by providing second formulation chocolate which comprises 10 to 50 wt% of sugar, 0 to 70 wt% of cocoa mass and 0 to 40 wt% of whole milk powder and/or skim milk powder and has a fat content of 30 to 60 wt% based on the overall weight of the second formulation chocolate, feeding the second formulation chocolate over an upper surface of the center material into contact with an outer edge of the shell chocolate portion after filling the hollow portion with the center material.

According to an inventive aspect of claim 2, the shell chocolate portion forming step of the center-filled chocolate production method of claim 1 comprises the steps of: melting the first formulation chocolate and pouring the first formulation chocolate in a concave mold; vibrating the concave mold containing the first formulation chocolate to degas the first formulation chocolate; engaging a cooled convex mold with the concave mold after the degassing, whereby the shell chocolate portion is solidified to be formed as having a constant thickness wall defined by a gap between the concave mold and the convex mold; and disengaging the convex mold from the concave mold and removing an excess portion of the first formulation chocolate protruding from the concave mold.

According to an inventive aspect of claim 3, the center filling step of the center-filled chocolate production method of claim 1 or 2 comprises the step of pouring a liquid material in the hollow portion of the shell chocolate portion, and the center-filled chocolate production method further comprises the step of evenly spraying chocolate having a different formulation from the first formulation chocolate over the liquid material poured in the shell chocolate portion prior to the bottom chocolate portion forming step.

According to an inventive aspect of claim 4, the cooled convex mold has a temperature of minus 10°C to minus 20°C in the center-filled chocolate production method of any of claims 1 to 3.
According to an inventive aspect of claim 5, there is provided a center-filled chocolate product, which comprises: a shell chocolate portion defining a hollow portion; a bottom chocolate portion connected to the shell chocolate portion and closing the hollow portion cooperatively with the shell chocolate portion; and a center material provided in the hollow portion; wherein the shell chocolate portion includes a constant thickness wall formed as having a recessed cross sectional shape to define the hollow portion with one face of the hollow portion being open by pressing melted chocolate by a cooled mold to solidify the chocolate; wherein the bottom chocolate portion is connected to an edge of the open face of the shell chocolate portion without any gap to close the open face of the shell chocolate portion; wherein the shell chocolate portion and the bottom chocolate portion are each made of chocolate comprising 10 to 50 wt% of sugar, 0 to 70 wt% of cocoa mass and 0 to 40 wt% of whole milk powder and/or skim milk powder and having a fat content of 30 to 60 wt% based on the overall weight of the chocolate.

According to an inventive aspect of claim 6, the center material is a liquid material, and a layer of chocolate having a different formulation from the shell chocolate portion and the bottom chocolate portion is provided between the liquid material and the bottom chocolate portion in the center-filled chocolate product of claim 5.
According to an inventive aspect of claim 7, the shell chocolate portion and the bottom chocolate portion have different formulations in the center-filled chocolate product of claim 5 or 6.

According to an inventive aspect of claim 8, the shell chocolate portion and the bottom chocolate portion have the same formulation in the center-filled chocolate product of claim 5 or 6.

### ADVANTAGEOUS EFFECTS OF INVENTION

According to the present invention, the shell chocolate portion and the bottom chocolate portion covering the center material are each made of the chocolate comprising 10 to 50 wt% of sugar, 0 to 70 wt% of cocoa mass and 0 to 40 wt% of whole milk powder and/or skim milk powder and having a fat content of 30 to 60 wt% based on the overall weight of the chocolate. Therefore, a greater amount of the center material can be stably contained in the chocolate product by producing the chocolate product by the inventive production method. In addition, the chocolate product provides a novel eating texture different from those of the conventional shell chocolate products, because the shell chocolate portion has a constant thickness.

Where the center material is a liquid material assuming a liquid state at an ordinary temperature (at about 25°C to about 28°C), the chocolate having a different formulation from the first formulation chocolate is evenly sprayed over the liquid material after the liquid material is poured in the shell chocolate portion in the production process. Thus, the liquid material and the bottom chocolate portion are prevented from being mixed together. Therefore, the shell chocolate portion and the bottom chocolate portion can be firmly combined with each other, thereby preventing leakage of the liquid material. As a result, the liquid material is prevented from adhering to a wrapping sheet.

Where the first formulation chocolate for the shell chocolate portion and the second formulation chocolate for the bottom chocolate portion have different formulations, the single center-filled chocolate product provides a variety of tastes.

### BRIEF DESCRIPTION OF DRAWINGS

FIG. 1 is an overall perspective view showing the external structure of a stick-shaped chocolate product according to one embodiment of the present invention.
FIG. 2 is a sectional view taken along a sectional plane A-A in FIG. 1 to show the internal structure of the stick-shaped chocolate product according to the embodiment of the present invention.
FIG. 3A is a flow chart showing a process sequence for producing the stick-shaped chocolate product with the names of process steps shown on a left-hand side of the sheet and with state diagrams shown on a right-hand side of the sheet.
FIG. 3B is a flow chart following FIG. 3A.

### DESCRIPTION OF EMBODIMENTS

Specific embodiments of the present invention will hereinafter be described in detail with referent to the attached drawings.

### EXAMPLES

FIG. 1 is an overall perspective view showing the external structure of a stick-shaped chocolate product 1 according to one embodiment of the present invention.
The stick-shaped chocolate product 1 has an elongated trapezoidal column shape (a tetragonal column shape having an isosceles trapezoidal cross section taken perpendicularly to the length thereof). The stick-shaped chocolate product 1 is dimensioned to have a bottom length of about 100 mm as measured longitudinally thereof, an upper width a (an upper base width of the trapezoidal shape) of about 8.5 mm and a lower width b (a lower base width of the trapezoidal shape) of about 11 mm as measured transversely thereof, and a height h of about 6.0 mm. The external shape of the stick-shaped chocolate product 1 may be a triangular column shape (prism shape), a tetragonal column shape, a pentagonal column shape, a hexagonal column shape or the like.

The stick-shaped chocolate product 1 has an wavy groove 2 provided in an upper surface thereof as extending from one longitudinal end to the other longitudinal end thereof (e.g., a sinusoidal groove 2 having a wavelength that is equal to a distance between the one longitudinal end and the other longitudinal end in FIG. 1). Thus, the upper surface of the stick-shaped chocolate product 1 to be brought into contact with a wrapping sheet can be divided into a plurality of smaller regions, thereby improving releasability with which the wrapping sheet is removed from the chocolate product 1.

FIG. 2 is a sectional view taken along a sectional plane A-A in FIG. 1 to show the internal structure of the stick-shaped chocolate product 1 according to the embodiment of the present invention.
The stick-shaped chocolate product 1 includes a shell chocolate portion 3 having a recessed cross sectional shape defining a hollow channel 4 (a hollow channel extending from the one longitudinal end to the other longitudinal end) which serves as a longitudinally elongated hollow portion, a plate-shaped bottom chocolate portion 5 connected to an edge of an open face of the shell chocolate portion 3 without any gap to close the open face of the shell chocolate portion 3, a sauce 6 provided as a center material in the elongated hollow channel 4, and a spray chocolate portion 7 provided on a surface of the bottom chocolate portion 5 adjacent to the hollow channel 4 in contact with the entire periphery of an interior wall of the shell chocolate portion 3 to liquid-tightly seal the hollow channel 4. Table 1 shows the formulations of constituent materials for stick-shaped chocolate products 1.

**Table 1**

| Example 1 (Caramel sauce)[wt%] | | | Example 2 (Strawberry sauce) [wt%] | | |
|---|---|---|---|---|---|
| «Shell and bottom chocolate portions» | | | «Shell and bottom chocolate portions» | | |
| | Sugar | 40 | | Sugar | 40 |
| | Cocoa mass | 25 | | Cocoa mass | 25 |
| | Whole milk powder | 13 | | Whole milk powder | 13 |
| | Vegetable fat/oil (sunflower, palm, canola) | 12 | | Vegetable fat/oil (sunflower, palm, canola) | 12 |
| | Cocoa butter | 10 | | Cocoa butter | 10 |
| | Lecithin | 0.3 | | Lecithin | 0.3 |
| | Flavor | 0.1 | | Flavor | 0.1 |
| | Total | 100 | | Total | 100 |
| | (Fat content) | Approx. 40 | | (Fat content) | approx. 40 |

| <<Spray chocolate portion>> | | | <<Spray chocolate portion>> | | |
|---|---|---|---|---|---|
| | Vegetable fat/oil (sunflower, palm, canola) | 50 | | Vegetable fat/oil (sunflower, palm, canola) | 50 |
| | Sugar | 30 | | Sugar | 30 |
| | Cocoa mass | 20 | | Cocoa mass | 20 |
| | Lecithin | 0.1 | | Lecithin | 0.1 |
| | Flavor | < 0.1 | | Flavor | < 0.1 |
| | Total | 100 | | Total | 100 |
| | (Fat content) | Approx. 60 | | (Fat content) | Approx. 60 |

| «Sauce» | | | «Sauce» | | |
|---|---|---|---|---|---|
| | Caramel sauce | 100 | | Strawberry sauce | 100 |

| Product part ratios [wt%] | | | Product part ratios [wt%] | | |
|---|---|---|---|---|---|
| | Shell chocolate portion | 47 | | Shell chocolate portion | 47 |
| | Caramel sauce | 30 | | Strawberry sauce | 30 |
| | Spray chocolate portion | 9 | | Spray chocolate portion | 9 |
| | Bottom chocolate portion | 14 | | Bottom chocolate portion | 14 |
| | Total | 100 | | Total | 100 |

In Table 1, a first formulation for the shell chocolate portion 3 and a second formulation for the bottom chocolate portion 5 are the same formulation in this embodiment. The formulations each include 40 wt% of sugar, 25 wt% of cocoa mass, 13 wt% of whole milk powder, 12 wt% of vegetable fat/oil (sunflower, palm and canola), 10 wt% of cocoa butter, 0.3 wt% of lecithin and 0.1 wt% of flavor. The shell chocolate portion 3 and the bottom chocolate portion 5 each have a fat content of about 40 wt% based on the total weight. In this embodiment, the fat content is attributable to the cocoa mass, the whole milk powder, the vegetable fat/oil and the cocoa butter.

The spray chocolate portion 7 is provided in the hollow channel 4 in order to prevent the sauce 6 from leaking from a connection portion between the shell chocolate portion 3 and the bottom chocolate portion 5. The spray chocolate portion 7 has a feature such that the fat content thereof is higher than those of the shell chocolate portion 3 and the bottom chocolate portion 5 (preferably not less than 50 wt%). The formulation for the spray chocolate portion 7 includes 50 wt% of vegetable fat/oil (sunflower, palm and canola), 30 wt% of sugar, 20 wt% of cocoa mass, 0.1 wt% of lecithin, and less than 0.1 wt% of flavor.

The sauce 6 includes 100 wt% of a caramel sauce (Example 1) or 100 wt% of a strawberry sauce (Example 2).
The product part ratios (the weight ratios of the respective parts) of the stick-shaped chocolate product 1 are such that the shell chocolate portion 3, the sauce 6 (the caramel sauce or the strawberry sauce), the spray chocolate portion 7 and the bottom chocolate portion 5 account for 47 wt%, 30 wt%, 9 wt% and 14 wt%, respectively.

Where the shell chocolate portion 3 and the bottom chocolate portion 5 thus have the formulations shown in Table 1, the stick-shaped chocolate product 1 can contain the sauce 6 in a proportion of as much as 30 wt% based on the overall weight thereof. In addition, the provision of the spray chocolate portion 7 substantially prevents the leakage of the sauce 6. Therefore, when the stick-shaped chocolate product 1 is bitten by teeth, the sauce 6 instantaneously spreads in the entire mouth. As a result, the stick-shaped chocolate product 1 has a novel eating texture different from those of the conventional block shell chocolate products, and is improved in taste.

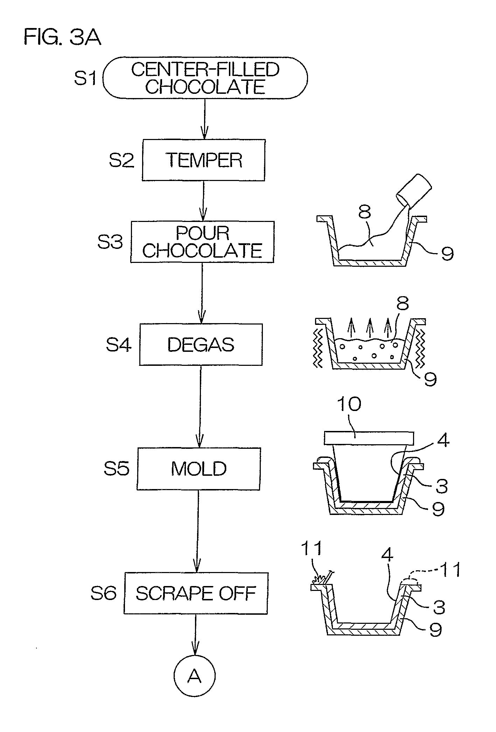

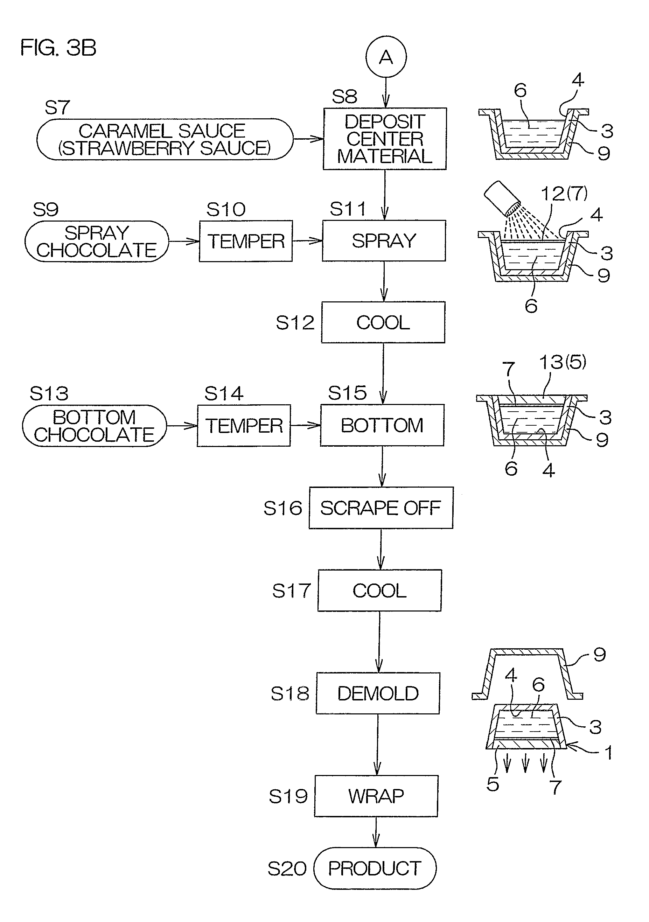

FIGS. 3A and 3B are flow charts showing a process sequence for producing the stick-shaped chocolate product 1 with the names of process steps shown on a left-hand side of the sheet and with state diagrams shown on a right-hand side of the sheet.
Referring to FIG. 3A, first chocolate 8 is prepared as a material for the shell chocolate portion 3 (S1), tempered (S2), and poured in a concave mold 9 defined as a concavity (S3). The first chocolate 8 has the same formulation (first formulation) as the shell chocolate portion 3 described with reference to Table 1.

In turn, the concave mold 9 containing the first chocolate 8 is vibrated to degas the first chocolate 8 (S4). After the degassing, a convex mold 10 cooled, for example, to about minus 18°C (-18°C) to about minus 16°C (-16°C) (defined as a cooled convexity) is engaged with the concave mold 9 for 1.5 seconds to 3 seconds (preferably about 2 seconds), and then disengaged from the concave mold 9 (S5). Thus, the shell chocolate portion 3 of the recessed cross sectional shape is formed as having the elongated hollow channel 4.

Subsequently, an excess portion 11 of the first chocolate 8 which has overflowed to protrude from the concave mold 9 during the engagement with the convex mold 10 is scraped off by means of a roller or the like with an open face of the concave mold 9 facing up (S6). Referring to FIG. 3B, the sauce 6 to be poured in the hollow channel 4 of the shell chocolate portion 3 is prepared (S7). Then, the sauce 6 is poured in the hollow channel 4, and smoothed in the hollow channel 4 by vibrating the entire concave mold 9 (S8). Thus, the center material is deposited.

In turn, a third chocolate 12 is prepared as a material for the spray chocolate portion 7 (S9), and tempered (S10). Then, the tempered third chocolate 12 is fed into a spray gun, and evenly sprayed over the sauce 6 in the hollow channel 4 and on a portion of the concave mold 9 around the sauce without any gap until the sauce 6 becomes invisible (S11). The third chocolate 12 has the same formulation as the spray chocolate portion 7 described with reference to Table 1.

Where a sauce assuming a liquid state at an ordinary temperature (about 25°C to about 28°C) is used as in this embodiment, the liquid sauce 6 is liable to migrate into the bottom chocolate portion 5 to be mixed with the solid bottom chocolate portion 5. In this case, a part of the sauce 6 migrating into the bottom chocolate portion 5 is liable to trigger the liquid leakage.
In this embodiment, however, a thin wall for preventing the migration of the liquid sauce 6 is formed between the sauce 6 and the bottom chocolate portion 7 by spraying the spray chocolate, so that the sauce 6 is prevented from being mixed with the bottom chocolate portion 5. Thus, the shell chocolate portion 3 and the bottom chocolate portion 5 can be firmly connected to each other, thereby preventing the leakage of the sauce 6. As a result, adhesion of the sauce 6 to a wrapping sheet can be prevented. The sauce 6 assuming the liquid state at the ordinary temperature (about 25°C to about 28°C) herein means a material having a viscosity such that it flows down immediately or in a short period after the shell chocolate portion 3 is turned upside down.

Where the hollow channel 4 is filled with solid chocolate or the like instead of the liquid sauce 6, there is no possibility that the solid chocolate leaks outside after the filling, because the chocolate does not migrate into the bottom chocolate portion 5 to be mixed with the bottom chocolate portion 5. Therefore, where the hollow channel 4 is filled with the solid chocolate or the like, the spray chocolate spraying step may be obviated.
After the spraying of the spray chocolate, a cooling process is performed so that the shell chocolate portion 3 filled with the sauce 6 is cooled together with the concave mold 9 to be thereby solidified (S12).

In parallel with the process sequence up to the solidification of the shell chocolate portion 3, second chocolate 13 is prepared as a material for the bottom chocolate portion 5 (S13), tempered (S14), and fed onto the shell chocolate portion 3 to close the open face of the hollow channel 4 of the shell chocolate portion 3 (S15). Thus, the resulting bottom chocolate portion 5 and the shell chocolate portion 3 cooperatively define the closed elongated hollow channel 4 and, at the same time, the sauce 6 is confined in the hollow channel 4.

After an excess portion of the second chocolate 13 is scraped off by means of a roller or the like (S16), a cooling process is performed to cool the stick-shaped chocolate product 1 formed with the bottom chocolate portion 5 together with the concave mold 9 to stabilize the shape of the stick-shaped chocolate product 1 (S17), and the stick-shaped chocolate product 1 is demolded from the concave mold 9 (S18). Thereafter, the stick-shaped chocolate product 1 is transferred to a wrapping machine to be wrapped (S19), and packaged as a product (S20).

The present invention is not limited to the embodiments described above, but various modifications may be made within the scope of the present invention defined by the appended claims.
The formulations for the shell chocolate portion 3 and the bottom chocolate portion 5, which are shown in Table 1 by way of example of the present invention, may be modified so as to include 10 to 50 wt% of the sugar, 0 to 70 wt% of the cocoa mass and 0 to 40 wt% of the whole milk powder and/or the skim milk powder and have a fat content of 30 to 60 wt% based on the total weight.

The center material for the stick-shaped chocolate product 1 is not limited to the liquid material such as the caramel sauce and the strawberry sauce, but may be a solid material such as of chocolate. Where the center material is the solid material, the center material is less liable to leak outside and, therefore, the spray chocolate spraying step may be obviated. Whether or not the spray chocolate spraying step is obviated is determined based on whether or not the center material assumes a liquid state at an ordinary temperature (about 25°C to about 28°C).

In the embodiments described above, the shell chocolate portion 3 and the bottom chocolate portion 5 have the same formulation, but may have different formulations. For example, the shell chocolate portion 3 may be made of brown chocolate, and the bottom chocolate portion 5 may be made of white chocolate. Where the shell chocolate portion 3 and the bottom chocolate portion 5 have different formulations, the single stick-shaped chocolate product 1 can provide various tastes.

### REFERENCE SIGNS LIST

- 1:: STICK-SHAPED CHOCOLATE PRODUCT
- 2:: GROOVE
- 3:: SHELL CHOCOLATE PORTION
- 4:: HOLLOW CHANNEL
- 5:: BOTTOM CHOCOLATE PORTION
- 6:: SAUCE
- 7:: SPRAY CHOCOLATE PORTION
- 8:: FIRST CHOCOLATE
- 9:: CONCAVE MOLD
- 10:: CONVEX MOLD
- 11:: EXCESS PORTION (OF FIRST CHOCOLATE)
- 12:: THIRD CHOCOLATE
- 13:: SECOND CHOCOLATE

## Claims

1. A method of producing a center-filled chocolate product, the center-filled chocolate production method comprising the steps of:
forming a shell chocolate portion including a constant thickness wall having a recessed cross sectional shape to define a hollow portion by providing first formulation chocolate which comprises 10 to 50 wt% of sugar, 0 to 70 wt% of cocoa mass and 0 to 40 wt% of whole milk powder and/or skim milk powder and has a fat content of 30 to 60 wt% based on an overall weight of the first formulation chocolate, melting the chocolate, pouring the melted chocolate in a concavity and engaging a cooled convexity with the concavity;
filling the hollow portion of the shell chocolate portion with a center material; and
forming a bottom chocolate portion to close an open face of the hollow portion of the shell chocolate portion by providing second formulation chocolate which comprises 10 to 50 wt% of sugar, 0 to 70 wt% of cocoa mass and 0 to 40 wt% of whole milk powder and/or skim milk powder and has a fat content of 30 to 60 wt% based on an overall weight of the second formulation chocolate, feeding the second formulation chocolate over an upper surface of the center material into contact with an outer edge of the shell chocolate portion after filling the hollow portion with the center material.

2. The center-filled chocolate production method according to claim 1, wherein the shell chocolate portion forming step comprises the steps of:
melting the first formulation chocolate and pouring the first formulation chocolate in a concave mold;
vibrating the concave mold containing the first formulation chocolate to degas the first formulation chocolate;
engaging a cooled convex mold with the concave mold after the degassing, whereby the shell chocolate portion is solidified to be formed as having a constant thickness wall defined by a gap between the concave mold and the convex mold; and
disengaging the convex mold from the concave mold and removing an excess portion of the first formulation chocolate protruding from the concave mold.

3. The center-filled chocolate production method according to claim 1 or 2, wherein the center filling step comprises the step of pouring a liquid material in the hollow portion of the shell chocolate portion,
the center-filled chocolate production method further comprising the step of evenly spraying chocolate having a different formulation from the first formulation chocolate over the liquid material poured in the shell chocolate portion prior to the bottom chocolate portion forming step.

4. The center-filled chocolate production method according to any of claims 1 to 3, wherein the cooled convex mold has a temperature of minus 10°C to minus 20°C.

5. A center-filled chocolate product comprising:
a shell chocolate portion defining a hollow portion;
a bottom chocolate portion connected to the shell chocolate portion and closing the hollow portion cooperatively with the shell chocolate portion; and
a center material provided in the hollow portion;
wherein the shell chocolate portion includes a constant thickness wall formed as having a recessed cross sectional shape to define the hollow portion with one face of the hollow portion being open by pressing melted chocolate by a cooled mold to solidify the chocolate;
wherein the bottom chocolate portion is connected to an edge of the open face of the shell chocolate portion without any gap to close the open face of the shell chocolate portion;
wherein the shell chocolate portion and the bottom chocolate portion are each made of chocolate comprising 10 to 50 wt% of sugar, 0 to 70 wt% of cocoa mass and 0 to 40 wt% of whole milk powder and/or skim milk powder and having a fat content of 30 to 60 wt% based on an overall weight of the chocolate.

6. The center-filled chocolate product according to claim 5,
wherein the center material is a liquid material,
wherein a layer of chocolate having a different formulation from the shell chocolate portion and the bottom chocolate portion is provided between the liquid material and the bottom chocolate portion.

7. The center-filled chocolate product according to claim 5 or 6, wherein the shell chocolate portion and the bottom chocolate portion have different formulations.

8. The center-filled chocolate product according to claim 5 or 6, wherein the shell chocolate portion and the bottom chocolate portion have the same formulation.
